# EUROPEAN PATENT APPLICATION

(11) **EP 1 110 610 A1**
(43) Date of publication of application: **27.06.2001**
(21) Application number: 99204504.7
(22) Date of filing: 23.12.1999
(51) Int. Cl.: B01L 3/00

(54) **Micro-titer plate with filter inserts and method of making same**

(71) Applicant: 3M Innovative Properties Company, St. Paul, Minnesota 55144 (US)
(72) Inventor: The designation of the inventor has not yet been filed
(74) Representative: Voortmans, Gilbert J.L.

(57) **Abstract**

Disclosed is a micro-titer plate and a method for making it comprising the steps of:
- providing an array of a plurality of sample containers connected to each other (10) and each having a bottom wall (20) with an outlet opening (22) and an opposite inlet opening (16);
- providing a filter sheet (1) having preformed therein a plurality of filter means (28) for insertion in said plurality of sample containers (10);
- positioning the filter sheet (1) such that said plurality of filter means (28) are in register with the inlet openings (16) of said sample containers (10);
- separating each of said plurality of filter means (28) from said sheet (1) and placing each of said filter means (28) in the sample container (10) with which it registers such that the filter means (28) abuts the bottom wall (20) and side walls (12) of the sample container (10).

## Description

### 1. Field of the invention.

The present invention relates to a method for producing a micro-titer test plate. Further, this invention relates to a micro-titer test plate that has a large number of sample containers per unit area.

### 2. Background of the invention.

Multi-well test plates, also called micro-titer plates or micro-titer test plates, are well-known and frequently used for assays involving biological or biochemical materials. Micro-titer test plates have been described in numerous patents including US 4,948,442, US 3,540,856, US 3,540,857, US 3,540,858, US 4,304,865, US 4,948,564, US 5,620,663, US 5,464,541, US 5,264,184, WO 97/41955, WO 95/22406, EP 645 187 and EP 98 534.

Selected wells in the micro-titer test plate can be used to incubate respective microcultures or to separate biological or biochemical material followed by further processing to harvest the material. Each well has filtration means so that, upon application of a vacuum to one side of the plate, fluid in each well is expressed through the filter leaving solids, such as bacteria and the like, entrapped in the well. The filtration means can also act as a membrane such that certain materials in the test specimen are selectively bonded or otherwise retained in the filter means. The retained material may thereafter be harvested by means of a further solvent. The liquid expressed from the individual wells through the filter means may be collected in a common collecting vessel in case the liquid is not needed for further processing or alternatively, the liquid from the individual wells may be collected in individual collecting containers as disclosed in US 5,464,541 and EP 98 534.

Up until recently, micro-titer plates have been used that conform to a standardized size of about 85.47 by 127.76 mm having 12 rows of 8 wells each. Many expensive automation equipment has been designed to this standard. However, there is now a desire to increase the productivity of such automatic sampling. Such should preferably be accomplished in the most cost effective way and it has been proposed to retain approximately the size of the micro-titer plates yet increasing the number of wells therein. This would require minimal changes in the automation equipment.

Various methods are known to produce a micro-titer plate. These methods are typically designed to produce the standard micro-titer plates having 96 wells. For example, such plates may be manufactured as multi-layer structures including a single sheet of filter material disposed to cover the bottom apertures of all the wells, the filtration material being bonded to the periphery of one or more of the well apertures. Such a structure may suffer from a problem called "cross-talk" by which fluid from adjacent wells mingles through for example capillary action, gravity or application of pressure.

As disclosed in U.S. Pat. No. 4,304,865, a micro-titer, multi-layer plate includes a substantially rigid culture tray provided with wells having upstanding edges or rims bounding the wider openings to the wells, and incubation is achieved while the culture tray is held "upside-down", i.e. the rims are disposed below the sheet. To harvest material from such wells, a sheet of filter paper is placed over the top of a substantially rigid harvester tray having a like plurality of wells, each disposed and dimensioned to provide a tight push-fit with respect to the periphery of the rim of a corresponding well in the culture tray. The latter is then pressed against the harvester tray to push the rims into the wells in the latter, thereby die-cutting filter discs from the filter tray. Such die-cutting may also be carried out by pressing an unused culture tray against the harvester tray. The harvester tray with the filter discs may then be pressed against the culture tray bearing the incubated material. A vacuum applied to the bottom surface of the harvester tray draws fluid from the culture tray wells through the respective filter discs. This technique of cutting the filter sheet while it overlays the wells has the disadvantage that dust formed during the cutting operation gets entrapped between the walls of the well and the filter medium which may cause poor separation performance. Such micro-titer plates are also taught to be prone to "cross talk" according to US 4,948,442.

Accordingly, the latter US patent proposes a method of manufacturing in which the wells of a culture tray and harvester tray are welded together with there between a filter sheet which extends across the openings of the wells. However, this method still does not completely solve the problem of cross talk. In particular, welding of the wells may not be sufficient to avoid capillary action to cause mingling of fluids from adjacent wells. Moreover, this problem will be even more enhanced with micro-titer plates that have a high number of wells per unit area.

It could also be contemplated to produce the micro-titer plate by providing an array of integrally connected wells having opposite inlet and outlet openings, separately die cutting filter means conforming to the opening of the wells from a filter sheet and then inserting the filter means into the individual wells of the micro-titer plate. This method however would have the disadvantage of being difficult to automate as the handling of the individual filter means would be complicated and cumbersome thus requiring sophisticated and expensive equipment. Moreover, the degree of complexity and risk of failure during production would substantially increase when the amount of wells per area increases.

Accordingly, it is desirable to find a further method for producing micro-titer plates, which method is preferably convenient, cost effective, capable of producing micro-titer plates that have a high number of wells per unit area and which micro-titer plates preferably have a reduced problem of cross-talk and good separation performance.

### 3. Disclosure of the invention.

The micro-titer plate of the present invention can be obtained by providing an array of a plurality of sample containers connected to each other of which each sample container has one or more side walls enclosing the interior of the sample container, a bottom wall with an outlet opening and an opposite upper end that is open and defines an inlet opening. The sample containers will generally be formed from a thermoplastic material and can be produced by injection molding. Typically thermoplastic materials that can be used include polystyrenes, polyvinyl chloride (including homo and copolymers thereof), polyethylenes and polyvinylidene chloride.

A plurality of filter means for insertion into the plurality of sample containers are preformed in a filter sheet. By the term "preformed" or "preforming" is meant that the shape and size of the filter means is substantially formed in the filter sheet but wherein the filter means continue to be held within the filter sheet such that they do not accidentally separate from the filter sheet during its handling. By the terms "filter means" and "filter sheet" in connection with this invention are meant any means or sheet that can cause separation of one or more components from a mixture of components. For example, the terms "filter means" and "filter sheet" include sheets that can separate a solid component from the liquid in a dispersion as well as a membrane or sheet which can separate components which may be dissolved by selectively binding them. The filter means of the present invention for example are means that allow selective adsorption, in particular of nucleic acids and proteins from liquids containing complete plant, animal or human cells or parts thereof. The filter sheet and filter means in connection with the present invention may be single layer sheets or means but they are preferably laminates comprising several layers. For example, according to a particular embodiment, the filter sheet and filter means can be a laminate of a pre-filter layer, a solid phase extraction medium preferably in the form of a membrane and a porous support layer. The filter means of the present invention will typically have a rigidity such that they will not substantially deform and substantially stay in place while being used so as to be capable of performing its separation function in the micro titer test plate.

Preforming the filter means in the filter sheet has the advantage that the filter means can be easily separated from the filter sheet creating a minimum of dust that could interfere with the performance of the filter. According to a first embodiment of preforming the filter means in the filter sheet, the filter means are partially cut out a filter sheet. Such partial cutting may be carried out by any cutting means known to those skilled in the art including, cutting by means of knifes, laser or water jets.

The filter means are cut out in such a way that the filter means stay connected to the filter sheet at one or more points on their periphery. By the term "stay connected at one or more points on the periphery" is meant that the major part of the periphery of the filter means is cut out and only a small portion on the periphery is not cut. At the minimum, the portion of the periphery that is not cut should be sufficient to retain the filter means on the filter sheet during further handling in the manufacturing of the micro-titer plate. Typically, it will suffice to have the filter means connected at 1, 2, 3 or 4 points on their periphery. Such points of connection will typically have a size of 0.1 mm to 2 mm.

According to an alternative embodiment, the filter sheet is a laminate of a prefilter layer and a porous support layer with a solid phase extraction medium there between. The filter means can then be preformed in the filter sheet by ultrasonically welding the prefilter layer and the porous support layer together at the periphery of the filter means. Preferably, the prefilter layer and porous support layer are welded together at the complete periphery of the filter means. Accordingly, the preformed filter means will then be comprised of the solid phase extraction medium that is enclosed by the prefilter layer and porous support layer that are welded together. Such preformed filter means can be subsequently separated from the filter sheet when overlaying the array of sample containers by punching the preformed filter means out of the filter sheet without substantial dust formation. However, dust formation during the separation of the filter means from the filter sheet may be further reduced by also partially cutting the preformed filter means at their periphery where the prefilter layer and support layer are welded together. The additional partial cutting can be carried out as described above.

The internal solid phase extraction medium (SPE) can be in a variety of forms, such as fibers, particulate material, a membrane, other porous material having a high surface area, or combinations thereof. Preferably, the SPE medium is in the form of a membrane that includes a fibril matrix and sorptive particles enmeshed therein. The fibril matrix is typically an open-structured entangled mass of microfibers. The sorptive particles typically form the active material. By "active" it is meant that the material is capable of capturing an analyte of interest and holding it either by adsorption or absorption. The fibril matrix itself may also form the active material, although typically it does not. Furthermore, the fibril matrix may also include inactive particles such as glass beads or other materials for enhanced flow rates.

The prefilter layer is a porous material that can be made of a wide variety of materials. Typically, and preferably, it is made of a nonwoven material. More preferably, it is a nonwoven web of melt blown microfibers. Such "melt blown microfibers" or simply "blown microfibers" or "BMF" are discrete, fine, discontinuous fibers prepared by extruding fluid fiber-forming material through fine orifices in a die, directing the extruded material into a high-velocity gaseous stream to attenuate it, and then solidifying and collecting the mass of fibers. In preferred embodiments, the prefilter layer includes a nonwoven web of melt blown polyolefin fibers, particularly polypropylene fibers.

The prefilter layer preferably has the following characteristics: a solidity of no greater than about 20%; a thickness of at least about 0.5 millimeters (mm); and a basis weight of at least about 70 grams per square meter (g/m²). As used herein, solidity refers to the amount of solid material in a given volume and is calculated by using the relationship between weight and thickness measurements of webs. That is, solidity equals the mass of a web divided by the polymer density divided by the volume of the web and is reported as a percentage of the volume. The thickness refers to the dimension of the prefilter through which the sample of interest flows and is reported in mm. The basis weight refers to mass of the material per unit area and is reported in g/m².

The support layer can be made of a wide variety of porous materials that do not substantially hinder flow of the liquid of the sample of interest. The porous material is typically a material that is capable of protecting the solid phase extraction medium from abrasion and wear during handling and use. The material is sufficiently porous to allow the liquid sample to flow through it, although it does not allow particles that might be within the solid phase extraction medium from contaminating the sample. Preferably, the support layer is made of a nonwoven material. Typically, and preferably, the material of the prefilter and the support layer are very similar in composition (as opposed to structure), and more preferably, they are the same.

The plurality of preformed filter means conform in arrangement, number and shape to the arrangement, number and shape of the sample containers of the array. Furthermore, the size of the filter means will typically be such that when the filter means are placed into the sample containers and are supported by the bottom wall of the sample containers, the periphery of the filter means will also abut the side walls of the sample container. Accordingly, the filter means will typically correspond to the size of the sample container near the bottom wall where the filter means are placed or they can be slightly larger. Accordingly, a filter sheet is obtained with preformed filter means that correspond in number, arrangement and shape to the sample containers of the array. This filter sheet is registered with the inlet openings of the sample containers such that the filter means can then be separated from the filter sheet and inserted into the sample containers.
Separation of the filter means can be caused by pressing the filter means into the sample container thereby tearing off the filter means or alternatively, the filter means may be separated by cutting at the periphery. The remainder of the filter sheet is removed. In accordance with the method of this invention, the filter means are placed such that they are supported by the bottom wall and are in abutment with the side walls of the sample container along their periphery. It should be understood that while the method of the present invention has been described with a certain order of the steps to be taken, it is clear that the steps of the present method of the invention may also be carried out in another order.

In accordance with a preferred embodiment of the present invention, the sample containers contain a band enclosing an opening. This band abuts along its periphery, the inner surface of the side wall(s) of the sample containers and presses or holds the filter means against the bottom wall of the sample container. The bands generally conform to the shape of the sample container and are preferably rings when the sample containers are tubular. The bands are preferably plastic or rubbery.

If bands are provided in the sample containers, they can be placed therein individually or they can be placed into the sample containers in a similar fashion as the placement of the filter means. Thus, a plurality of interconnected bands may be provided, for example connected via a thin film sheet. These interconnected bands can then be placed on the upper end of the sample containers in register with the inlet openings of the sample containers and they can then be separated from each other and pressed into the sample containers to abut the filter means.

Micro-titer plates produced in accordance with the present invention generally are less prone to cross-talk, are fairly convenient to produce, and have a good separation performance. With the micro-titer plates of the present invention, it is possible to perform a physical separation, a chemical separation, or a bio-polymer separation or extraction of liquids containing plant, animal or human cells, and it allows, in particular, to perform the separation of nucleic acids and/or proteins of the cells. To this effect, the liquid in the sample container penetrates a filter means having selective adsorbing material, the liquid leaving the filter means and entering a collecting container. Preferably, the filter means having selectively adsorbing material has chromatographic properties, which can include ion exchange properties or affinity-chromatographic properties, if the filter means comprises suitable affinity ligands. A preferred filter means comprises a fibrillated polytetrafluoroethylene matrix having enmeshed therein sorptive derivatized silica particulates as are disclosed in U.S. Pat. Nos. 4,810,381 and 4,699,717, respectively. Subsequently, the collecting container is replaced by another one, and a liquid containing a solvent is applied onto the filter means, which selectively removes a certain portion of the material adsorbed in the filter means so that it may enter the collecting container.

The filter means of the device of the present invention may comprise one or several layers. Preferred filter means comprise a fibrillated polytetrafluoroethylene matrix having sorptive particulates enmeshed therein, as is disclosed, for example, in U.S. Pat. No. 4,810,381. In one embodiment, the filter means may be formed by two porous fixation means, in particular frits, with particles therebetween. Preferably, the particles can be in the form of bulk material, have chromatographic properties as described before. The preferred particles are made from a material that is based on silica gel, dextran or agarose. Frits may consist of glass, polyethylene (PE) or polytetrafluoroethylene (PTFE) and have a pore size of about 0.1-250 µm, preferably about 100 µm.

The thickness of the particle layer is about 1-10 mm, preferably 2.5 mm, with an average particle size of 1-300 µm, preferably 16-23 µm.

According to a further embodiment, the filter means has a support membrane in which the adsorptive particles are embedded. Since the support membrane can be rather weak and there being a possibility that it can burst when a partial vacuum is applied on it (of comparatively high pressure difference), a back-up fabric or fibrous layer can be arranged below the support membrane, which provides integrity to the support membrane on the bottom wall of the sample container and preferably consists of a non-woven polyalkylene fibrous material such as polypropylene or polyethylene.

The micro-titer plate of the present invention is not limited to the dimensions of the single parts mentioned herein. Generally, the micro-titer plate of the invention can be produced in any desired size. Nevertheless, the method of the present invention is particularly suitable for producing micro-titer plates that have a large number of sample containers per unit of area.

Accordingly, the present invention in another aspect also provides a micro-titer plate comprising an array of between 360 and 400 sample containers connected to each other each having one or more side walls enclosing the interior of said sample container, a bottom wall with an outlet opening and an opposite upper end that is open and defines an inlet opening and each of said sample containers having an individual filter means that is in abutment with the side walls along its periphery and that is further in abutment with said bottom wall and wherein said micro-titer test plate has a length between 11 and 13 cm and a width between 8 and 9 cm.

Typically, the micro-titer plates produced in connection with this invention will have a plurality of sample containers connected to each other each generally of a tubular form although other forms such as sample containers that have at least a section with a rectangular or square cross-section can be used as well. The side walls enclosing the interior of the sample containers may taper towards the outlet opening although preferably the sample containers are tubular without substantially tapering towards the outlet opening. The outlet openings of the sample containers of the micro-titer plates that can be produced in connection with this invention preferably are enclosed by an outlet spout that extends in the axial direction of the sample container. This spout is preferably tapered towards its free end and may be surrounded by a collar.

### 4. Brief description of the drawings

The invention is further illustrated by means of reference to the following drawings that represent preferred embodiments of the invention without however the intention to limit the invention thereto:
Figures 1a and 1b show a schematic drawing of a filter sheet showing a plurality of filter means partially cut out.
Figure 2 shows a cross-sectional view of an individual sample container of a micro-titer plate according to the invention.
Figure 3 shows three dimensional representation of a micro-titer plate in connection with the invention.
Figures 4a-d schematically shows the insertion of the filter means into the sample containers by tearing them of the filter sheet.
Figure 5 shows the remainder of the filter sheet after the filter means have been separated therefrom.
Figure 6 shows a plurality of rings that are connected of each other by a film.
Figure 7 shows the placement of the rings shown in figure 6 into the sample containers of a micro-titer plate according to the invention.

### 5. Detailed description of the preferred embodiments

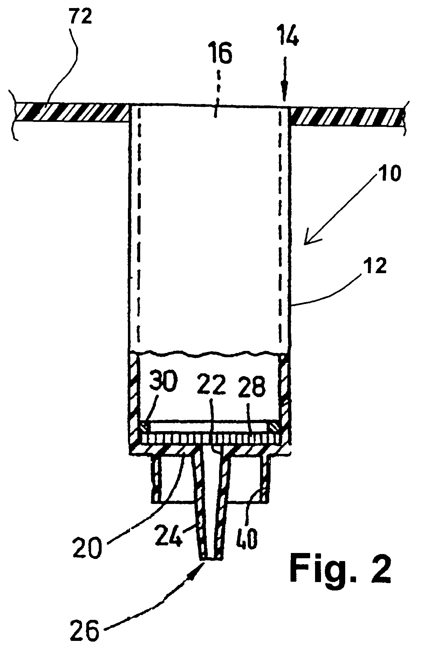

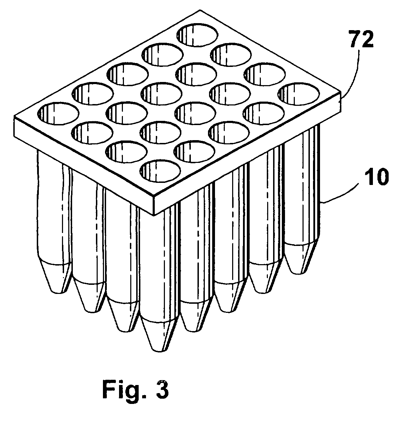

Referring now to figure 3, there is shown a three dimensional representation of an array of a plurality of sample containers 10 connected to each other. As shown in figure 3, the sample containers 10 are connected to each other by a plate 72. Figure 2 shows a cross-sectional view of an individual sample container 10, preferably tubular, of a micro-titer plate produced in connection with the method of the present invention, i.e. with filter means 28 already inserted therein. As can be seen from figure 2, each of the plurality of sample containers has a side wall 12 enclosing the interior of the sample container 10. Sample container 10 further has an upper end 14 which is open and defines an inlet opening 16. Opposite to the upper end is bottom wall 20 for supporting filter means 28. Bottom wall 20 has an opening 22 that defines the outlet opening of sample container 10. The outlet opening 22 is enclosed by a spout 24 which extends in the axial direction of the sample container 10. Spout 24 preferably tapers towards its free end 26 and can have a length of up to 2cm, preferably 0.1 to 1cm, more preferably, 0.2 to 1cm. The diameter of the spout which optionally decreases towards the free end of spout 24 is typically 0.2 to 2.0mm. The lower surface of bottom wall 20 of sample container 10 also has an axially projecting annular collar 40 formed thereon and which coaxially encloses the outlet spout 24. Collar 40 is shorter than outlet spout 24 which projects downwards beyond the end of collar 40 for about half the length thereof.

Figure 2 further shows the filter means 28 within the sample container 10. Filter means 28 is disposed on bottom wall 20, covers outlet opening 22 and is in abutment along its periphery with the inner surface of side wall 12. A rubbery, preferably plastic retaining ring 30 pressing against the inner surface of side wall 12 keeps filter means 28 set against the bottom wall 20.

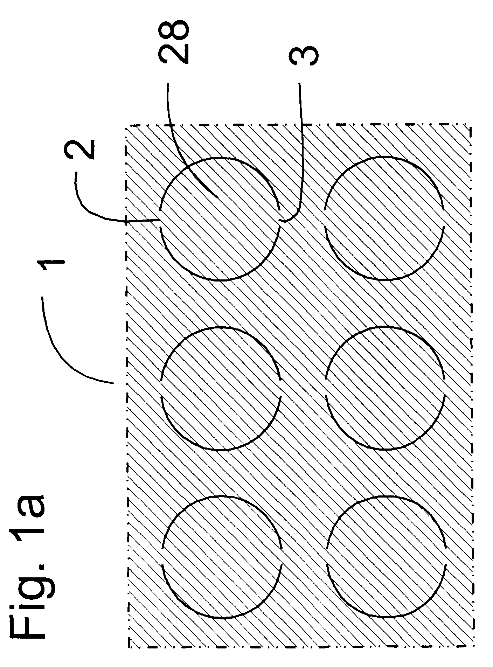

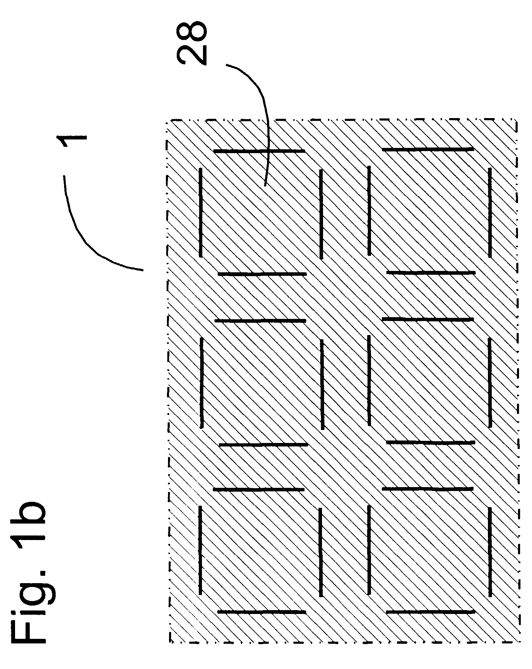

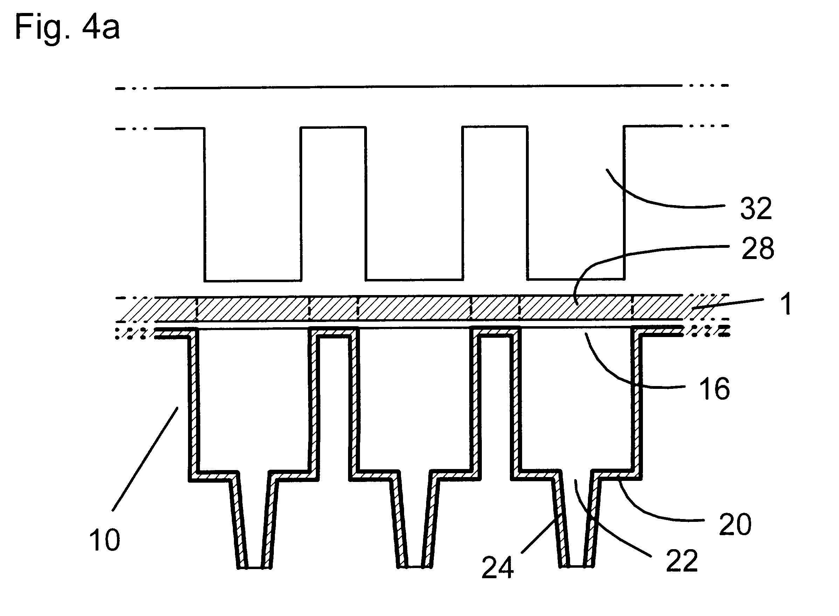

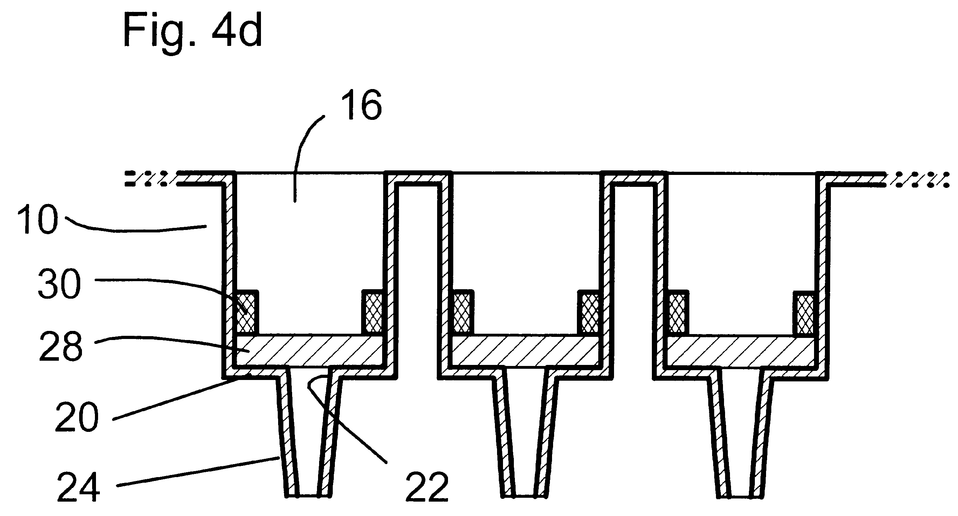

With reference to figures 1a,1b and figures 4a-d, the method of the present invention for inserting filter means 28 in each of the sample containers 10 will now be illustrated. In accordance with the method of the present invention, there is provided a filter sheet 1. As shown in figures 1a and 1b filter means 28 are partially cut out in the filter sheet 1. A plurality of filter means 28 are partially cut out from a single filter sheet, which conform in arrangement, shape and number to the plurality of sample containers of the array in which the filter means will be inserted. Figures 1a and 1b show a few of such filter means 28 partially cut out in the filter sheet 1. Filter means 28 of figure 1a have a circular periphery to conform to a tubular sample container. As can be seen, filter means 28 in figure la have been cut along there periphery except for two oppositely laying points 2, 3 where the filter means 28 remain connected to the filter sheet 1. Filter means 28 of figure 1b have a square periphery to conform to a sample container that has a square cross-section in a plane parallel to the bottom wall of the sample container. The filter means 28 in figure 1b have been cut along the periphery leaving only the four corners at the periphery uncut.

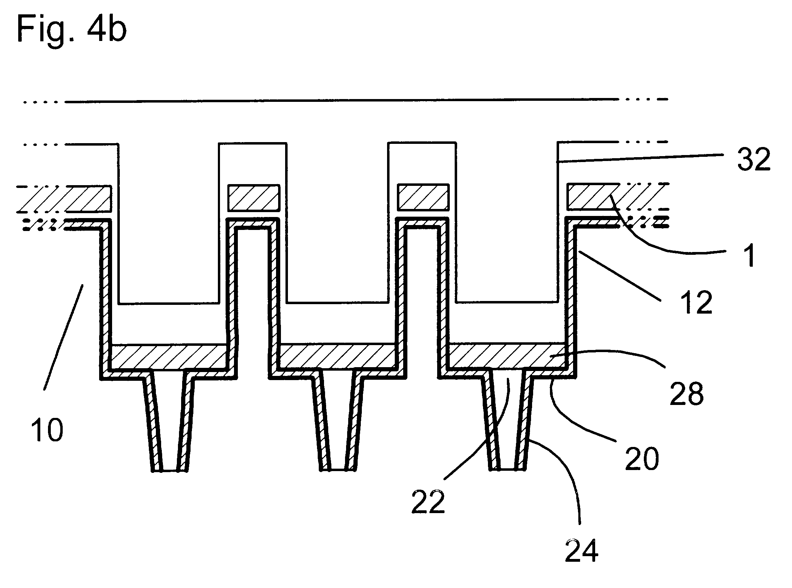

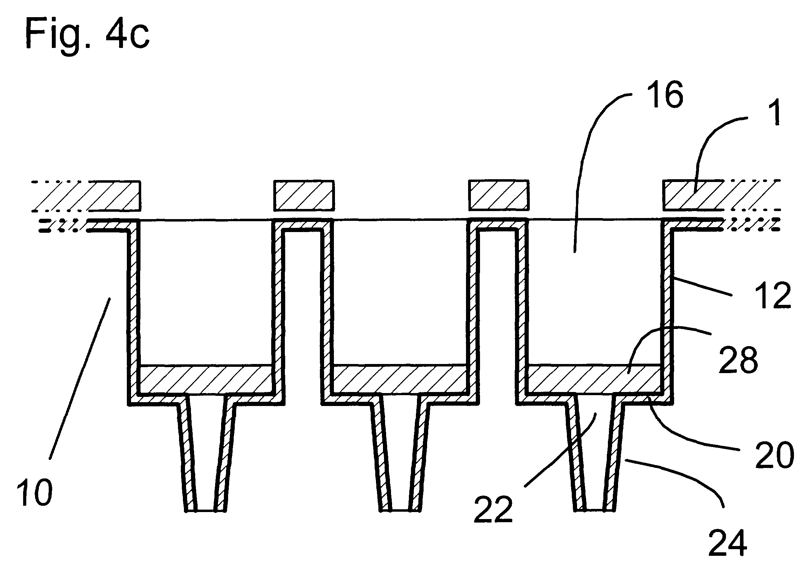

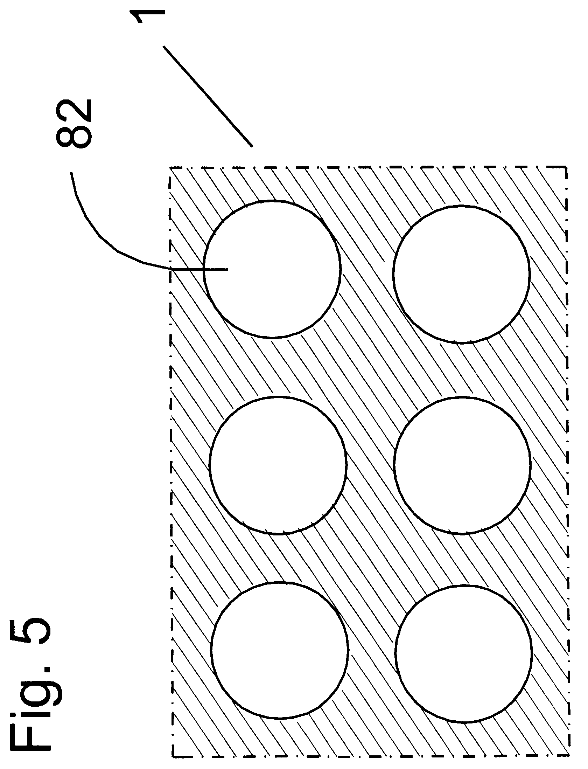

Referring now to figures 4a to 4d which show a cross-sectional view of the plurality of sample containers 10 connected to each other. As shown in figure 4a, the filter sheet 1 with a plurality of filter means 28 partially cut out is placed on inlet openings 16 at the upper end of the plurality of sample containers such that the filter means 28 are in register with the inlet openings 16. To place the filter means 28 into register with the inlet openings 16, registering aids well known to those skilled in the art may be employed if desired. For example, the array of sample containers may be provided with register pins (not shown) and the filter sheet 1 can be provided with corresponding register holes (not shown). Further shown in figure 4a is a plurality of pistons 32 that are dimensioned such that they can penetrate the interior of the sample containers 10 up to the bottom of the sample containers 10. As shown in figure 4b, by moving the plurality of pistons 32 downwards or alternatively by moving the sample containers 10 with the filter sheet thereon over the pistons, the filter means 28 are torn off at the points were they were still connected at the filter sheet 1 and are pressed by the pistons against the bottom wall 20 of the sample container 10. To avoid that the filter means 28 would be incorrectly positioned at the bottom wall, it may be desirable to apply a vacuum to the pistons to keep the filter means in position while pressing them downwards into the sample containers 10. However, if movement of the pistons into the sample containers 10 is fast enough, the risk of an incorrect positioning of the filter means will be low and it may not be necessary to apply a vacuum to the pistons in that case. Instead of tearing off the filter means 28, they may be cut at the points where they are still connected to the filter sheet 1. For example, the points may be cut by a laser or alternatively, the edges of the pistons may be provided as sharp edges to cut the points while pressing the filter means 28 into the sample containers 10. When the points are cut to separate the filter means 28 from the filter sheet, cutting of the points is then generally carried out while the filter means 28 are in register with the openings 16 and thereafter the filter means 28 can be pressed by the pistons 32 against the bottom wall 20. Figure 4c shows the result after the pistons are again withdrawn. As can be seen from this figure, the filter means 28 are now supported by the bottom wall of the sample containers 10 and abut the inner surface of the side wall 12 of the containers 10. The remainder of filter sheet 1 from which the filter means 28 were separated is left on the upper end of the sample containers 10. This remainder of the filter sheet 1 is then removed. Figure 5 shows a planar view of filter sheet 1 showing the circular openings 82 created by separation of the filter means 28 from filter sheet 1.

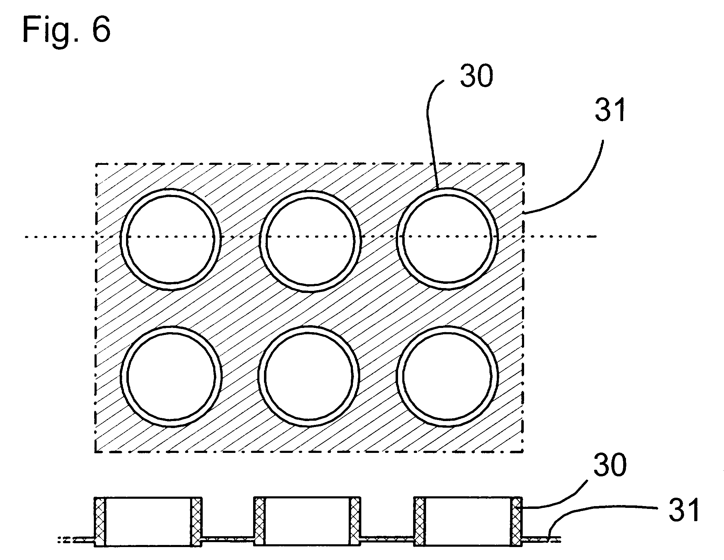

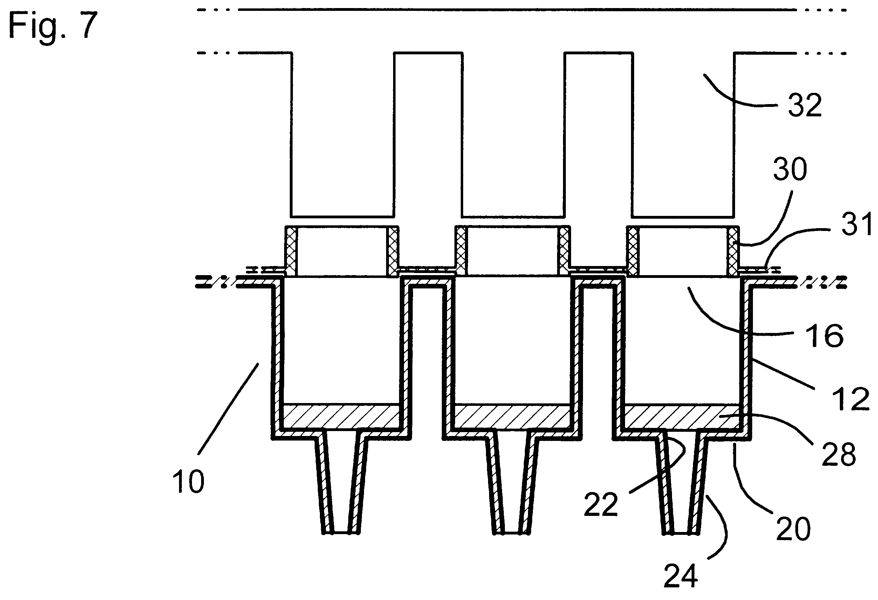

According to a preferred embodiment in connection with the present invention, the filter means 28 are pressed against the bottom wall by a band 30 defining an opening and abutting the inner surface of side wall 12. Preferably band 30 is a ring. These rings may be individually inserted by pistons but are preferably inserted in a similar way in which the filter means 28 are inserted in the sample containers 10. This is illustrated in figures 6 and 7.

Figure 6 shows a planar view as well as a cross-section along the indicated line of a plurality of rings 30 that are connected to each other by thin film 31. The film 31 may be thinned at the circumference of the rings 30 to make separation of the rings 30 from the film 31 easier. Alternatively, rings 30 may be connected to each other via thin rods. As shown in figure 7, the film 31 with rings 30 is placed on the upper end of the sample containers 10 such that they are in register with openings 16 of the sample containers 10. Pistons 32 may then press the rings into the sample containers 10 while simultaneously separating the rings 30 from the film 31. Pistons 32 will push the rings 30 against the filter means 28 to cause a press-tight connection therewith. To further ease the separation of the rings 30 from the film 31, the pistons may be provided with sharp edges to cut the rings along their circumference. Also, the rings 30 may be partially cut along their circumference in a similar way as the filter means 28 are partially cut from the filter sheet 1.

## Claims

1. Method for making a micro-titer plate comprising the steps of:
- providing an array of a plurality of sample containers (10) connected to each other and each having one or more side walls (12) enclosing the interior of said sample container (10), a bottom wall (20) with an outlet opening (22) and an opposite upper end (14) that is open and defines an inlet opening (16);
- providing a filter sheet (1) having preformed therein a plurality of filter means (28) for insertion in said plurality of sample containers (10), said plurality of filter means (28) conforming in arrangement, number and shape to the arrangement, number and shape of said plurality of sample containers (10);
- positioning the filter sheet (1), with said plurality of filter means (28) preformed therein, over said plurality of sample containers (10) such that said plurality of filter means (28) are in register with the inlet openings (16) of said sample containers (10);
- separating each of said plurality of filter means (28) from said filter sheet (1) while being in register with said inlet openings (16) of said sample containers (10) and placing each of said filter means (28) in the sample container (10) with which the filter means (28) is in register such that the filter means (28) abuts the bottom wall (20) and side walls (12) of the sample container (10);
- and removing the filter sheet (1) from which the filter means (28) have been separated.

2. Method according to claim 1 wherein said plurality of filter means (28) have been preformed in said filter sheet (1) by partially cutting out said filter means (28) in such a way that each of the filter means (28) remains connected to the filter sheet (1) at at least one point (2,3) on its periphery.

3. A method according to claim 1 wherein said filter sheet (1) is a laminate of a prefilter layer and a porous support layer with a solid phase extraction medium there between, and the plurality of filter means (28) being preformed in said filter sheet by ultrasonically welding said prefilter layer and porous layer together at the periphery of the filter means (28).

4. Method according to any of the previous claims wherein said plurality of filter means (28) are separated from said filter sheet (1) by pressing each of said filter means (28) in the inlet opening (16) of the sample container (10) with which the filter means (28) is in register thereby causing each of said filter means (28) to be torn off the filter sheet (1), said filter means simultaneously being pressed to abut the bottom wall (20) of the sample container (10).

5. Method according to claim 1 wherein said separation of said plurality of filter means (28) from said filter sheet (1) while being in register with said inlet openings (16) of said sample containers (10) comprises cutting the filter means (28) at their periphery.

6. Method according to any of the previous claims wherein each of the filter means remains connected to the filter sheet at 2, 3 or 4 points on the periphery of the filter means.

7. Method according to any of the previous claims wherein the array of said plurality of sample containers (10) connected to each other has a length between 11 and 13 cm, a width between 8 and 9 cm and wherein the number of said sample containers (10) connected to each other is between 360 and 400.

8. Method according to any of the previous claims wherein the outlet openings (22) of each of said sample containers (10) are enclosed by a spout 24 that extends in the axial direction of the sample container (10).

9. Method according to any of the previous claims further comprising the step of placing in each of said sample containers (10) a band (30) enclosing an opening such that said band (30) is in abutment with said filter means (28) and abuts the inner surface of side walls (12).

10. Method according to claim 9 wherein said placement of said band (30) into said sample containers (10) is carried out by the steps of providing a plurality of interconnected bands (30), placing them at the upper end of said plurality of sample containers (10) in register with the inlet openings (16), separating said bands (30) from each other and pressing them into said sample containers (10) to abut the filter means (28).

11. A micro-titer test plate comprising an array of between 360 and 400 sample containers connected to each other (10) each having one or more side walls (12) enclosing the interior of said sample container (10), a bottom wall (20) with an outlet opening (22) and an opposite upper end (16) that is open and defines an inlet opening (14) and each of said sample containers (10) having an individual filter means (28) that is in abutment with the side walls (12) along its periphery and that is further in abutment with said bottom wall (20) and wherein said micro-titer test plate has a length between 11 and 13 cm and a width between 8 and 9 cm.

12. A micro-titer test plate according to claim 11 wherein the outlet openings (22) of each of said sample containers (10) are enclosed with a spout 24 that extends in the axial direction of the sample container (10).
